(19) Europäisches Patentamt
European Patent Office
Office européen des brevets

(11) **EP 1 269 044 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(21) Anmeldenummer: **02710061.9**

(22) Anmeldetag: **01.02.2002**

(51) Int Cl.:
***F16H 61/12*** *(2006.01)*

(86) Internationale Anmeldenummer:
**PCT/EP2002/001041**

(87) Internationale Veröffentlichungsnummer:
**WO 2002/063188 (15.08.2002 Gazette 2002/33)**

(54) **VERFAHREN ZUR FRÜHERKENNUNG VON STÖRFÄLLEN BEIM BETRIEB AUTOMATISCHER ODER AUTOMATISIERTER GETRIEBE**

METHOD FOR EARLY RECOGNITION OF ABNORMAL OCCURRENCES IN THE OPERATION OF AUTOMATIC OR AUTOMATED GEARBOXES

PROCEDE DE RECONNAISSANCE RAPIDE DE DEFAUTS DANS LE FONCTIONNEMENT DE TRANSMISSIONS AUTOMATIQUES ET AUTOMATISEES

(84) Benannte Vertragsstaaten:
**AT BE CH CY DE DK ES FI FR GB GR IE IT LI LU MC NL PT SE TR**

(30) Priorität: **07.02.2001 DE 10105836**

(43) Veröffentlichungstag der Anmeldung:
**02.01.2003 Patentblatt 2003/01**

(73) Patentinhaber: **Voith Turbo GmbH & Co. KG**
**89522 Heidenheim (DE)**

(72) Erfinder:
• **DEPPING, Herbert**
**89537 Giengen (DE)**

• **DIETZEL, Bernd**
**89428 Syrgenstein (DE)**
• **SCHÖNHAAR, Thomas**
**89555 Steinheim (DE)**

(74) Vertreter: **Dr. Weitzel & Partner**
**Friedenstrasse 10**
**89522 Heidenheim (DE)**

(56) Entgegenhaltungen:
EP-A- 0 310 277      EP-A- 0 668 456
EP-A- 0 849 505      DE-A- 19 745 175
DE-A- 19 857 961     US-A- 5 613 583

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Früherkennung von Störfällen beim Betrieb automatischer oder automatisierter Getriebe mit kraftschlüssig wirkenden Schaltelementen.

Automatische Getriebe, insbesondere automatische Fahrzeuggetriebe, und automatisierte Getriebe sind in einer Vielzahl von Ausführungen bekannt. Diese können als rein mechanisches Getriebe, als Kombination wenigstens eines mechanischen Getriebeteiles mit einem hydraulischen Getriebeteil, eines mechanischen Getriebeteils mit einem elektrischen Getriebeteil oder aber als stufenlose mechanische Getriebe vorliegen. Der hydraulische Getriebeteil kann dabei entweder einen hydrostatischen Getriebeteil umfassen, oder aber ein hydrodynamisches Bauelement. Bei Getrieben mit wenigstens zwei unterschiedliche Getriebeteilen arbeiten diese entweder in Reihe geschaltet oder mit Leistungsverzweigung. Derartige Getriebe mit Kombination eines mechanischen Getriebeteils mit einem hydraulischen Getriebeteil sind beispielsweise aus J.M. Voith GmbH: Hydrodynamik in der Antriebstechnik, Krauskopf Verlag, 1987 bekannt.

Die Betätigung der Schaltelemente zur Änderung eines Fahrzustandes bzw. des mittels der Antriebsmaschine ausgenutzten Betriebsbereiches erfolgt bei den meisten automatischen und automatisierten Schaltgetrieben elektrohydraulisch. Dabei erfolgt die Vorwahl des einzustellenden Fahrzustandes bzw. die Änderung des Fahrzustands über ein Betätigungselement in Form eines Gangschalthebels oder eines Tastenschalters, wobei über die die Betätigung charakterisierenden physikalischen Größen entsprechende elektrische Signale generiert werden, welche der Ansteuerung von Steuerventilen dienen, die wiederum der Betätigung einzelner Schaltelemente zur Realisierung einer kraftschlüssigen Verbindung oder Unterbrechung dienen. Bei vollautomatischen Getrieben werden die Gänge über eine hydraulische oder elektrohydraulische Steuerungseinrichtung automatisch in Abhängigkeit von der Motorbelastung und der Fahrzeuggeschwindigkeit geschaltet. Die Schaltung geschieht dabei mit Hilfe von Bremsbändem, Mehrscheibenkupplungen oder Mehrscheiben-Bremseinrichtungen unter Last. Als Schaltelemente finden hauptsächlich hydraulisch betätigte Reibelemente, vorzugsweise in Form von Lamellen- oder Scheibenkupplungen- und/oder Bremsen Anwendung: Diese übernehmen die Aufgabe, den Kraftfluß im Getriebe entsprechend dem geschalteten Gang herzustellen oder zu unterbrechen.

Nicht einwandfrei ablaufende Schaltvorgänge und auffällige Getriebegeräusche sind ein Anzeichen für Störungen der Getriebebaueinheit. Zur Erkennung der Ursache von Schaltstörungen ist es bekannt, die Modulator-, Regler- und Arbeitsdrücke zu prüfen. Das Getriebe wird dazu mit den notwendigen Prüfanschlüssen versehen, an die Prüfgeräte mit verschiedenen Meßbereichen angeschlossen werden können. Der Modulator- und Arbeitsdruck kann im Stand bei laufendem Motor überprüft werden. Die Messung des Reglerdruckes muß jedoch während der Fahrt oder auf einem Rollenprüfstand erfolgen. Meist erfolgt jedoch die Diagnose erst, nachdem bereits Schaltstörungen im großen Maß aufgetreten sind und im einzelnen bereits auffällige Getriebegeräusche zu einem erhöhten Verschleiß der kraftschlüssig miteinander zu koppelnden Reibelemente geführt haben. Indikatoren zur Ermittlung von Schaltstörungen sind somit Störungen im Betrieb des automatischen Getriebes, welche bereits von einer Schädigung herrühren. Zur Beseitigung sind dann in der Regel Bauteilaustauschmaßnahmen erforderlich.

Zur frühzeitigen Erkennung ist daher aus der Druckschrift DE 196 52 212 A1, das als nächstliegender Stand der Technik angesehen wird, ein Verfahren zur Früherkennung von Störfällen, insbesondere Schadensfrüherkennung bekannt, welches geeignete Indikatoren nutzt, mittels der Veränderungen am Getriebe, Veränderungen der Druckmittelversorgung sowie der zur Getriebesteuerung gehörenden Bauteile frühzeitig ermittelt werden. Dazu wird während des Betriebes des automatischen Getriebes ein aktueller Ist-Wert wenigstens einer, einen Schaltvorgang wenigstens mittelbar charakterisierenden Größe bei jedem Schaltvorgang ermittelt. Dieser Ist-Wert wird mit wenigstens einem Soll-Wert für gleichartige Schaltvorgänge verglichen. Bei Abweichung wird die Stellgröße zur Beaufschlagung der kraftschlüssigen miteinander in Wirkverbindung bringbaren Elemente eines Schaltelementes zur wenigstens mittelbaren Beeinflussung der den Schaltvorgang charakterisierenden Größe geändert. Dazu ist wenigstens ein Grenzwert für den Ist-Wert einer den Schaltvorgang wenigstens mittelbar charakterisierenden Größe und/oder wenigstens ein Grenzwert für eine das Änderungsverhalten des Ist-Wertes über eine Mehrzahl von hintereinander vorgenommenen gleichartigen Schaltvorgängen, d.h. von einer ersten bestimmten Ausgangsschaltstufe in eine nächste zweite Zielschaltstufe, wenigstens mittelbar charakterisierenden Größe festsetzbar. Den Grenzwerten sind dabei Kriterien zugeordnet, welche ein zulässiges Verhalten des Ist-Wertes gegenüber dem Grenzwert charakterisieren. Bei Abweichungen des Grenzwertes vom Ist-Wert derart, daß diese Kriterien nicht mehr erfüllt sind, wird eine Fehlermeldung erzeugt bzw. ein Fehlersignal gebildet. Die Kriterien für den Vergleich der Ist-Werte bzw. das Änderungsverhalten des Ist-Wertes mit dem Grenzwert oder den Grenzwerten bringen dabei zum Ausdruck, daß mit dem Grenzwert bzw. den Grenzwerten ein bestimmter Ist-Wert-Bereich abgedeckt werden soll, innerhalb dessen der Betrieb unschädlich für das Getriebe ist. Ein wesentlicher Nachteil einer derartigen Lösung besteht darin, daß die Anpassung zwischen den Soll- und Ist-Werten über eine adaptive Steuer- oder Regelungsstrategie erfolgt, wobei lediglich indirekt über die Nicht-Erzielung des gewünschten Ergebnisses mittels der Adaption auf einen Störfall bzw. einen daraus später möglicherweise resultierenden Störfall geschlossen werden kann. Diese Lösung ist somit nur für Getriebe mit adaptivem Schaltverfahren einsetzbar, andere Getriebebaueinheiten, denen andere Schaltverfahren zur Beschreibung der Betriebsweise zugrundeliegen, können mit diesen Verfahren nicht überwacht werden.

Der Erfindung liegt deshalb die Aufgabe zugrunde, ein Verfahren zum frühzeitigen Erkennen von Störfaktoren beim Betrieb eines automatischen Getriebes oder automatisierten Schaltgetriebes zu entwickeln, welches es ermöglicht, Schädigungen und Funktionsstörungen, welche insbesondere durch Fertigungs- oder Montagefehler und unter anderem auch zunehmenden Verschleiß bedingt sind, unabhängig vom verwendeten Schaltprogramm frühzeitig, d.h. vor Eintritt eines die Funktion stärker und eventuell bis zum Totalausfall beeinträchtigenden Schadens zu erkennen, um somit einen größeren Schaden am Getriebe zu verhindern. Das Verfahren soll unabhängig vom verwendeten Schaltprogramm mit gleichem Aufwand für jegliche Art von Getriebebaueinheiten - automatischen und automatisierten Schaltgetrieben - nutzbar sein.

Die erfindungsgemäße Lösung ist durch die Merkmale des Anspruchs 1 charakterisiert. Vorteilhafte Ausgestaltungen sind in den Unteransprüchen wiedergegeben.

Erfindungsgemäß wird bei einer Schaltung, insbesondere Hoch- oder Rück- oder Bremsschaltung eine die Belastung der miteinander kraftschlüssig zu koppelnden Elemente wenigstens mittelbar beschreibenden Größe fortlaufend ermittelt und in einer Variablen aufsummiert. Dabei handelt es sich im einfachsten Fall bei der die Belastung der kraftschlüssig miteinander zu koppelnden Elemente wenigstens mittelbar charakterisierenden Größe um die Reibarbeit. Diese wird dabei aus der mathematischen Verknüpfung der Differenz der jeweiligs aktuellen Drehzahl der Antriebsseite, insbesondere der Getriebeeingangswelle bzw. der mit dieser gekoppelten Antriebsmaschine zur Synchrondrehzahl der folgenden Gangstufe, auch Zielgang genannt, und dem Druck, mit welchem das Schaltelement, insbesondere die miteinander in Wirkverbindung bringbaren Reibflächen der Schaltelemente beaufschlagt wird, ermittelt. Unter Synchrondrehzahl der folgenden Gangstufe wird die Drehzahl am Eingang der Schaltstufen, d.h. am Abtrieb des hydrodynamischen Bauelementes oder der Überbrückungskupplung verstanden. Das Ergebnis wird dabei in einer Variablen aufsummiert, wobei zusätzliche Einflußgrößen, wie beispielsweise die aktuelle Rückstellfederkraft und Fliehkraft mit einbezogen werden. Diese Variable wird vor Beginn einer jeden Schaltung immer auf Null zurückgesetzt. Die Berechnung beginnt, sobald die aktuelle Drehzahl bei Einlegen der Zielgangsstufe von der Synchrondrehzahl der letzten zu verlassenden Gangstufe, d.h. Ausgangsstufe abweicht oder eine vorgegebene Zeitdauer seit Lösen des abgehenden Schaltelementes oder dem Beginn der Schaltung abgelaufen ist. Diese Größe ist, insbesondere für den Fall der Erkennung eines nicht vollständigen Lösens eines Schaltelementes, von Bedeutung. Die Aufsummierung wird beendet, wenn die Synchrondrehzahl oder eine entsprechende Vergleichsdrehzahl, welche die Synchrondrehzahl wenigstens mittelbar charakterisiert, in der folgenden, d.h. einzulegenden Zielgangstufe erreicht wird oder der Schaltvorgang abgebrochen wird oder die maximale Schaltdauer $T_{max}$ überschritten bzw. abgelaufen ist.

Die Größe der aufsummierten Variablen wird mit einem vordefinierten oder vorgebbaren, eventuell auch aus Versuchen ermittelten Maximalwert verglichen. Bei Überschreitung wird die Ausgangsstufe wieder eingelegt und die hier gewählte Zielgangsstufe zumindest für Schaltfolgen zwischen dieser Ausgangsstufe und der Zielgangsstufe gesperrt sowie eine Warnmeldung an den Fahrer ausgegeben. Unter einem weiteren Aspekt der Erfindung wird die Zielgangstufe auch generell für jeden beliebigen beliebigen Schaltvorgang zwischen einem Ausgangsgang und diesem Zielgang gesperrt, d.h. die Gangstufe, für welche das Schaltelement aktiviert wird, wird gesperrt.

Bei Unterschreitung des Maximalwertes wird die aufsummierte Variable weiteren Untersuchungen unterzogen, um eventuell für sich anbahnende, jedoch noch (zeitlich) in weiterer Ferne liegende Schäden vorbeugende Maßnahmen zu treffen, welche nicht zur Sperrung des Zielganges bzw. des Ganges, welcher durch die Betätigung des überwachten Schaltelementes charakterisiert ist, führen müssen.

In der Regel wird dabei eine Warnmeldung ausgegeben. Diese vorbeugenden Maßnahmen beinhalten dabei unter anderem auch die Beeinflussung des Fahr- und Schaltverhaltens, so daß die (zu überwachenden) Schaltelemente Situationen, die im Dauerbetrieb zu Schädigungen führen können, nicht mehr oder nur noch in Ausnahmesituationen ausgesetzt werden.

Bei diesem Verfahren werden auf einfache Art und Weise durch Analyse der einzelnen Schaltvorgänge gezielt Rückschlüsse auf den Zustand der an einer Schaltung beteiligten Elemente gezogen. Dabei werden in der Regel die ohnehin zu erfassende Größen berücksichtigt, so daß der zusätzliche sensorische Aufwand minimiert werden kann. Der Maximalwert charakterisiert dabei einen Zustand geringfügiger, den Betrieb noch nicht unmittelbar beeinflussender Schädigungen, welche jedoch demnächst zum Ausfall der Getriebebaueinheit führen.

Unter einem weiteren Aspekt der Erfindung wird während des Schaltvorganges geprüft, ob das abgegebene Moment der Antriebsmaschine, bei Verbrennungskraftmaschinen insbesondere das Motormoment, im wesentlichen einen konstanten Verlauf aufweist. Ist dies der Fall, wird bei Unterschreitung des Maximalwertes nach erfolgter Synchronisierung, d.h. nach Erreichen der Synchrondrehzahl im Zielgang geprüft, ob die aufsummierte Variable einen weiteren zweiten, kleineren Maximalwert noch überschreitet. Dabei wird bei einer Überschreitung eine sogenannte erste Zählervariable erhöht. Bei Nicht-Überschreitung wird für den gerade vorgenommenen Schaltvorgang diese erste Zählervariable wieder erniedrigt. Die Erhöhung bzw. Erniedrigung kann dabei in unterschiedlich einstellbaren Stufen erfolgen. Diese können beispielsweise als Konstanten fest vorgegeben sein, in Abhängigkeit von der Größe der Überschreitung durch unterschiedliche fest vorgegebene Werte darstellbar oder aber berechenbar sein. Den Zählervariablen sind auch Grenzwerte zugeordnet, mindestens jedoch ein Grenzwert.

Überschreitet dabei die erste Zählervariable einen ersten, dieser Zählervariable zugeordneten Grenzwert, gibt die Steuerung eine Warnmeldung an den Fahrer aus bzw. bewirkt die Generierung eines entsprechenden Signales zur Ansteuerung einer Einrichtung zur Ausgabe einer Warnmeldung, so daß vorbeugende Maßnahmen getroffen werden können. Überschreitet die Zählervariable einen zweiten noch höheren Grenzwert, wird zusätzlich der aktuell eingelegte Gang mit dem überwachten Schaltelement, d.h. der Zielgang nach der nächsten erfolgten Rückschaltung gesperrt.

Bei Überscheitung des zweiten kleineren Maximalwertes durch die aufsummierte Variable bei gleichen Schaltvorgängen von einem bestimmten ersten Ausgangsgang in einen bestimmten Zielgang, wird gleichzeitig die Anzahl der Überschreitungen des zweiten kleineren Maximalwertes über die Anzahl gleicher Schaltvorgänge ermittelt und diese Überschreitung in einer weiteren zweiten Zählervariable aufsummiert. Dieser zweiten Zählervariable ist ein Grenzwert zugeordnet, hinsichtlich dessen ein Vergleich erfolgt. Bei Überschreitung wird ebenfalls eine Warnmeldung ausgegeben.

Zur Vermeidung einer ungleichmäßigen Beeinflußung der ermittelten Zählervariablen für Schaltungen mit unterschiedlichen Motormomenten wird vorzugsweise das Moment der Antriebsmaschine in mehrere Klassen unterteilt, und jeder Schaltung und jeder Motormomentenklasse eine eigene, unabhängige Zählervariable zur Verfügung gestellt.

Das erfindungsgemäße Verfahren ist hinsichtlich der vorrichtungsmäßigen Umsetzung nicht auf eine bestimmte Steuereinrichtung beschränkt. Dieses kann in der Steuereinrichtung der Getriebebaueinheit, oder bei Einbindung dieser in ein Datenkommunikationsnetzwerk in einer dieser nebengeordneten oder übergeordneten Steuereinrichtung durchgeführt werden.

Die erfindungsgemäße Lösung ist nachfolgend anhand von Figuren erläutert. Darin ist im einzelnen folgendes dargestellt:

Figur 1    verdeutlicht anhand eines Signalflußbildes das Grundprinzip eines erfindungsgemäßen Verfahrens zur Früherkennung;

Figur 2    verdeutlicht eine besonders vorteilhafte Ausführung eines erfindungsgemäßen Verfahrens zur Früherkennung von Störfällen;

Figur 3    verdeutlicht den Verlauf der Zählervariablen anhand eines Diagrammes;

Figuren 4a und 4b    verdeutlichen anhand von Diagrammen den Drehzahlverlauf von Antriebsmaschine und Abtrieb sowie des zugehörigen Steuerdruckes beim Wechsel zwischen zwei unterschiedliche Betriebsbereiche charakterisierende Gangstufen.

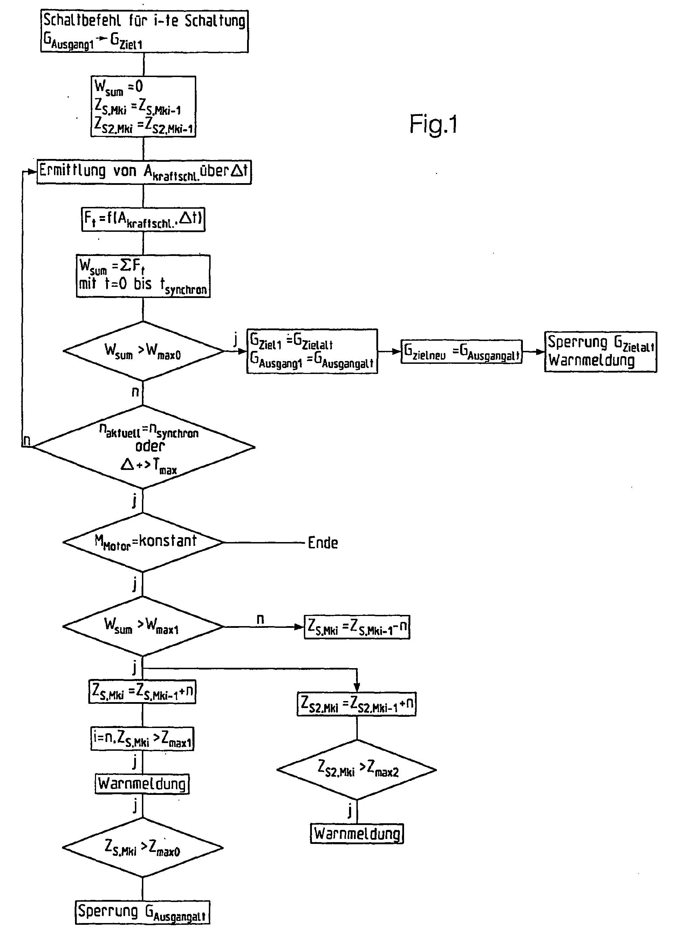

Die Figur 1 verdeutlicht anhand eines Signalflußbildes das Grundprinzip des erfindungsgemäßen Verfahrens zur Früherkennung von Störfällen in Form von Funktionsstörungen, Verschleißerscheinungen oder sich anbahnender Getriebeschäden bei automatischen Getrieben und automatisierten Schaltgetrieben. Dazu wird in einem ersten Verfahrensschritt während des Schaltvorganges, ausgehend von einem Ausgangsgang $G_{Ausgang}$ zu einem Zielgang $G_{Ziel}$ in einem Zeitintervall t insbesondere während der Rutschphase einer Schaltung, egal ob Hoch-, Rück- oder Bremsschaltung, mindestens eine die Belastung der kraftschlüssig miteinander zu koppelnden Elemente charakterisierende Größe $A_{kraftschl.}$ fortlaufend ermittelt. Die Ermittlung erfolgt dabei über das bestimmtes Zeitintervall t. Die Ermittlung wird beendet, wenn die Synchrondrehzahl der gewünschten neu einzulegenden Gangstufe $G_{Ziel}$ erzielt ist oder eine bestimmte maximale Zeitdauer Tmax überschritten ist. Dabei wird der gleiche Schaltvorgang beispielsweise von $G_{Ausgang1}$ zu $G_{Ziel1}$ über eine bestimmte Anzahl i überwacht. Die die Belastung der kraftschlüssig miteinander zu koppelnden Elemente charakterisierende Größe $A_{kraftschlüssig}$ wird dabei mathematisch mit der Zeitdauer verknüpft, hier als $F_t$ definiert, und das jeweilige Ergebnis $F_t$ in einem dritten Verfahrensschritt in einer sogenannten Variablen $W_{sum}$ aufsummiert, und zwar solange, bis die Synchrondrehzahl erreicht ist. Die Zeitdauer wird mit $t_{synchron}$ bezeichnet. Diese Variable wird dabei zu Beginn der Schaltung immer auf Null gesetzt. Bei Überschreitung eines vorgebbaren, vorzugsweise vorgegebenen Maximalwertes $W_{max0}$ durch die gebildete Variable über das entsprechende Zeitintervall wird die vorhergehende Gangstufe wieder eingelegt und der aktuelle Gang für weitere Schaltungen gesperrt und eine Warnmeldung an den Fahrer ausgegeben. Die Ausgabe der Warnmeldung kann optisch oder akustisch erfolgen. $G_{Ziel\,neu} = G_{Ausgang}$.

Bei Erreichen der Synchrondrehzahl $n_{synchron}$ wird kontrolliert, ob die Variable $W_{sum}$ auch einen zweiten, kleineren vordefinierbaren Maximalwert $W_{max1}$ überschreitet. Bei Überschreitung wird eine Zählervariable $Z_{S,MK}$ erhöht. Für den Fall, daß keine Überschreitung vorliegt, wird die Zählervariable $Z_{S,MK}$ wieder erniedrigt. Überschreitet nach einer bestimmten vordefinierbaren oder festgelegten Anzahl von Schaltvorgängen die Zählervariable $Z_{S,MK}$ einen Grenzwert $Z_{max1}$ wird von seiten der Steuerung eine Ausgangsgröße gebildet, welche der Erzeugung einer Warnmeldung dient. Diese kann akustisch oder optisch erfolgen. Über die Ausgangsgrößen werden entsprechende Einrichtungen zur Ausgabe einer Warnmeldung angesteuert. Die Warnmeldung dient der Ergreifung vorbeugender Maßnahmen durch den Fahrer. Wird dabei dieses Verhalten bei Vollastschaltungen erkannt, kann bereits durch Reduzierung des Motormomentes bei künftigen Schaltungen gleicher Art eine weitere Verschlechterung des Getriebezustandes verhindert werden. Bei Überschreitung eines weiteren zweiten noch höheren Grenzwertes $Z_{max0}$ wird zusätzlich die aktuelle Gangstufe nach der nächsten Rückschaltung gesperrt. Dabei finden die Verfahrensschritte 6 ff., d.h. die Kontrolle des Maximalwertes $W_{max1}$ nur dann statt, wenn während der Schaltung das Motormoment nahezu konstant geblieben ist. Dazu wird das Motormoment während des Schaltvorganges erfaßt.

Im dargestellten Fall wird die Zählervariable der i-ten Schaltung von $G_{Ausgang1}$ zu $G_{Ziel1}$ mit $Z_{S,MKi}$ bezeichnet und aus der Zählervariable $Z_{S,MKi-1}$ des vorhergehenden, d. h. i-1-ten Gangstufenwechsels durch Heraufsetzen oder Erniedrigen um einen Zähler n gebildet. Für die i-te Schaltung von $G_{Ausgang1}$ zu $G_{Ziel1}$ wird dann das Verhalten der Zählervariable $Z_{S,MKi}$ gegenüber Grenzwerten $Z_{max1}$ und $Z_{max0}$ geprüft.

Des weiteren ist eine weitere Zählervariable $Z_{S2,MK}$ vorgesehen, welche der Ermittlung der Überschreitungen des Maximalwertes $W_{max1}$ dient. Diese Variable wird bei einem gut verlaufenden Schaltverfahren nicht erniedrigt und bleibt nach Ausschalten der Zündung als $Z_{S2,MKi-1}$ erhalten. Überschreitet diese jedoch einen Grenzwert $Z_{max2}$ erfolgt ebenfalls eine Warnmeldung an den Fahrer. Nach Beseitigung der Ursache muß manuell oder von seiten des Fahrers die Variable $Z_{S2,MK}$ wieder auf Null gesetzt werden.

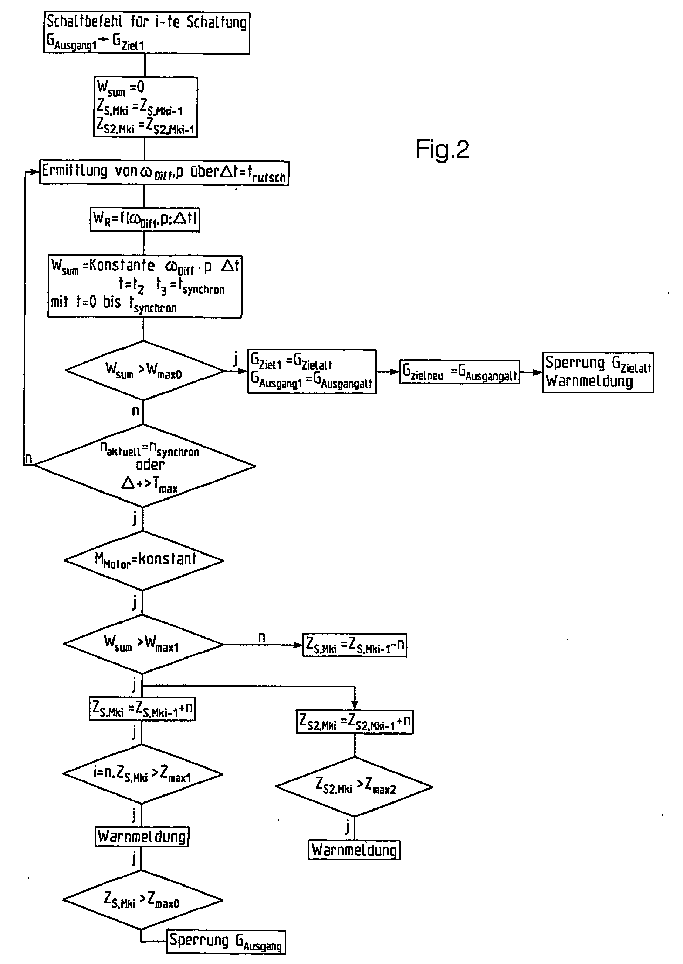

Figur 2 verdeutlicht anhand eines Signalflußbildes die Durchführung des erfindungsgemäßen Verfahrens, wobei die die Belastung der kraftschlüssig miteinander zu koppelnden Elemente charakterisierende Größe durch die die Reibarbeit charakterisierenden Größen beschrieben wird. Dazu wird konkret während der Rutschphase $t_{rutsch}$ der einzelnen miteinander kraftschlüssig zu koppelnden Elemente die Drehzahldifferenz $\omega_{dif}$ an den reibschlüssig miteinander zu koppelnden Elementen und der Druck p, mit welchem das Schaltelement beaufschlagt wird, fortlaufend erfaßt. Die Erfassung kann dabei direkt, d.h. durch die direkte Ermittlung der genannten Größen erfolgen oder aber indirekt durch Erfassung der diese Größen wenigstens mittelbar charakterisierenden Größen und Umrechnung in die genannten Größen Drehzahldifferenz $\omega_{dif}$ und der die Schaltelemente beaufschlagende Druck p. Die Reibarbeit $W_R$ für einen Schaltvorgang wird dabei zumindest zyklisch errechnet und aufsummiert. Vorzugsweise erfolgt eine fortlaufende Erfassung und Aufsummierung für einen bestimmten Zyklus, welcher durch die Zeitdifferenz zwischen zwei vorgegebenen Zeiträumen $t_2$ und $t_3$ bestimmt ist. Die Reibarbeit $W_R$ berechnet sich dabei beispielsweise nach folgender Formel:

$$W_R = \frac{M_R \cdot \omega_R \cdot t_R}{2}$$

mit

$W_R$ - Reibarbeit
$M_R$ - Rutschmoment
$\omega_R$
$t_R$ - Rutschzeit

oder anhand der ohnehin erfaßten Größen von Drehzahldifferenz $\omega_{dif}$ und des an den einzelnen Schaltelementen anliegenden Druckes zu jedem Zeitpunkt p gemäß der Formel

$$W_{sum0} = \text{Kons}\tan\text{te} \cdot \int_{t=t_2}^{t=t_3} \omega_{dif} \cdot p \cdot \Delta t$$

Dabei wird vor Beginn eines Schaltvorganges die Variable $W_{sum0}$ immer auf den Wert Null zurückgesetzt. Die Berechnung der Reibarbeit beginnt, sobald die aktuelle Drehzahl der Antriebsmaschine von der Synchrondrehzahl in der zuletzt eingelegten Gangstufe deutlich abweicht, d.h. eine bestimmte Abweichung überschreitet oder aber eine zusätzliche, vorgegebene Verzögerungszeit seit dem Schaltbefehl der Steuerung abgelaufen ist. Daher wird dieser Zeitpunkt auch mit $t_2$ bezeichnet. Dieser beschreibt die Zeitdifferenz zwischen dem Beginn eines Schaltvorganges, im einzelnen die Einleitung eines Schaltvorganges und eine bestimmte Zeitdauer des Schaltvorganges. Die Aufsummierung wird erreicht, wenn die Synchrondrehzahl, d.h. die Drehzahl der Antriebsmaschine in der einzulegenden Gangstufe eine entsprechende Vergleichsdrehzahl erreicht oder die Schaltung abgebrochen wird. Dieser Zeitraum ist mit $t_3$ oder auch $t_{synchron}$ bezeichnet. Diese mathematische Verknüpfung der einzelnen Größen erfolgt im Verfahrensschritt 2, während die Aufsummierung im Verfahrensschritt 3 erfolgt. Die Aufsummierung kann dabei fortlaufend, d.h. parallel zur Ermittlung der einzelnen, die Belastung der kraftschlüssig miteinander zu koppelnden Elemente charakterisierenden Größen erfolgen oder aber nach einem bestimmten Zeitraum aus den mit der mathematischen Verknüpfung zueinander in Beziehung gesetzten, die Belastung der kraftschlüssig miteinander zu koppelnden Elementen charakterisierenden Größen.

Im nächstfolgenden Verfahrensschritt 4 wird geprüft, ob die aufsummierte Variable $W_{sum}$ einen vorgebbaren oder vordefinierbaren Maximalwert $W_{max0}$ überschreitet. In diesem Fall wird sofort die vorhergehende Ausgangsgangstufe wieder eingelegt und der Schaltvorgang in den gewünschten Zielgang unterbrochen sowie der Zielgang gesperrt und eine Warnmeldung an den Fahrer erzeugt, welche durch Generierung akustischer oder optischer Signale vorgenommen werden kann.

Zusätzlich wird während des Schaltvorganges das von der Antriebsmaschine abgegebene Moment, insbesondere Motormoment $M_M$ überwacht und dessen Verlauf über den Schaltvorgang insbesondere die Dauer ermittelt. Wird dabei bis zum Erreichen der Synchrondrehzahl ein nahezu konstanter Verlauf des Motormomentes beobachtet, wird die Variable einer weiteren Untersuchung unterzogen. Zunächst wird dabei überprüft, ob $W_{sum0}$ einen zweiten kleineren Maximalwert $W_{max1}$ überschreitet. Bei Überschreitung wird nunmehr eine Zählervariable $Z_{S,MK}$ erhöht. Findet keine Überschreitung statt, wird die Zählervariable $Z_{S,MK}$ wieder erniedrigt. Überschreitet die Zählervariable $Z_{S,MK}$ eine Grenzwert $Z_{max1}$ wird eine Warnmeldung erzeugt, so daß vorbeugende Maßnahmen getroffen werden können. Wird dieses Verhalten bei einer Vollastschaltung erkannt, wird das Motormoment für künftige Schaltvorgänge gleicher Art reduziert. Überschreitet die Zählervariable $Z_{S,MK}$ einen weiteren zweiten Grenzwert $Z_{max0}$, welcher größer als der erste Grenzwert $Z_{max1}$ ist, wird zusätzlich der aktuell einzulegende Gang, d.h. der Zielgang nach der nächsten Rückschaltung gesperrt. Dabei wird für eine Vielzahl von Antriebssystemen das Motormoment bei dieser Bewertung in mehrere Klassen unterteilt. Für jede Schaltung und jede Motormomentenklasse steht dabei eine eigene unabhängige Zählervariable $Z_{S,MK}$ zur Verfügung. Dadurch wird verhindert, daß Schaltungen mit unterschiedlichen Motormomenten und Zählervariablen sich gegenseitig beeinflußen können. In Analogie kann das gleiche Verfahren auch für Unterschreitungen für Minimalwerte durchgeführt werden.

Auch hier zählt eine weitere Zählervariable $Z_{S2,MK}$ nur die Überschreitungen des Maximalwertes $W_{max1}$ für die Reibarbeit. Diese Variable wird dabei bei einer guten Schaltung nicht erniedrigt und bleibt nach Ausschaltung der Zündung erhalten. Überschreitet diese jedoch einen vorgebbaren Grenzwert $Z_{max2}$ folgt ebenfalls eine Warnmeldung.

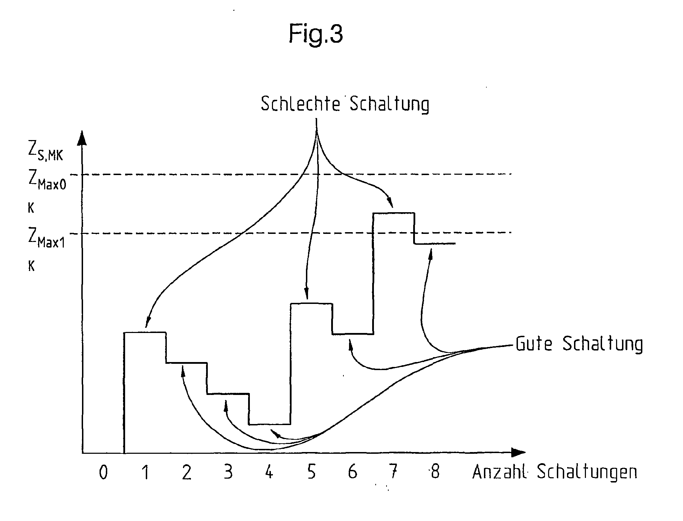

Der Zählerverlauf für die Zählervariable $Z_{S,MK}$ ist beispielhaft in der Figur 3 anhand eines Diagrammes über der Anzahl der Schaltungen dargestellt.

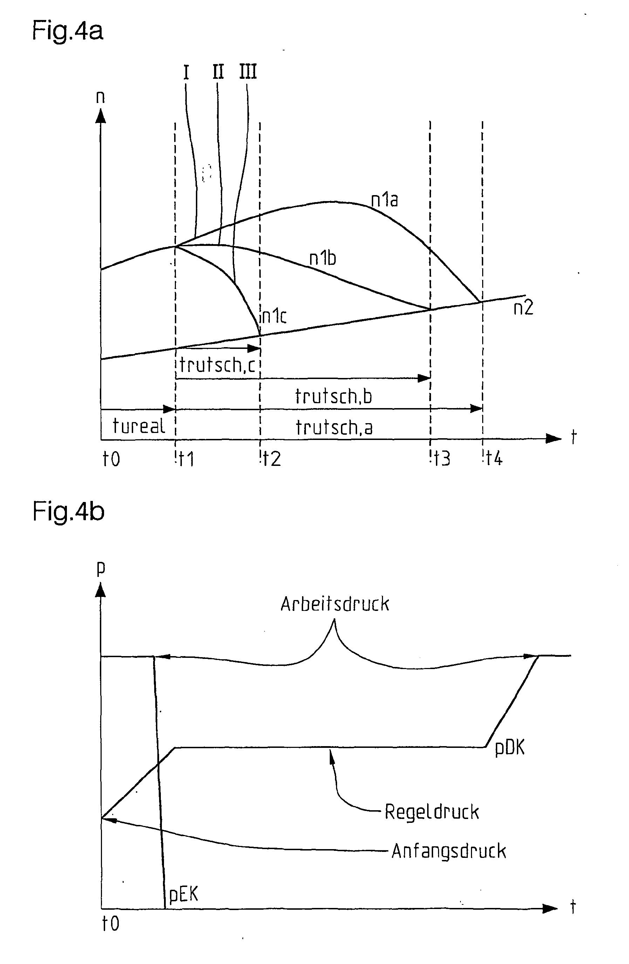

Die Figuren 4a und 4b verdeutlichen anhand von Diagrammen den Drehzahlverlauf der Antriebsmaschine und dazugehörig des Steuerdruckes über die Zeitdauer eines Schaltvorganges. In der Figur 4a ist dabei der Drehzahlverlauf einer Antriebsmaschine $n_1$ und des Abtriebes, d.h. beispielsweise der Getriebeausgangswelle unter Berücksichtigung der eingelegten Getriebestufe beispielhaft dargestellt. Die Schaltung beginnt dabei zu einem Zeitpunkt $t_0$ und endet zum Zeitpunkt $t_2$ bzw. $t_3$ bei Erreichen der Synchrondrehzahl. Der Zeitpunkt $t_1$ verdeutlicht dabei den Beginn der Synchronisation, d.h. der Rutschzeit. Dabei verdeutlichen die drei eingezeichneten Kurven I bis III für den Drehzahlverlauf n der Antriebsmaschine im ersten Fall, d.h. bei der mit I bezeichneten Kurve eine zu lange Rutschzeit $t_{rutscha}$, die Kurve II eine optimale Rutschzeit $t_{rutschb}$ und die Kurve III eine zu kurze Rutschzeit $t_{rutschc}$. Die einzelnen angegebenen Zeitintervalle, ausgehend von $t_0$, die sich durch Summierung der Zeitdauern $t_{ureal}$ und $t_{rutscha,b,c}$ ergeben, insbesondere die Zeitintervalle $t_2$, $t_3$ und $t_4$ verdeutlichen die Dauer der Aufsummierung.

In Figur 4b ist der Druckverlauf zur Steuerung der Schaltelemente, insbesondere der Steuerdruck beispielhaft für einen Schaltvorgang gemäß Figur 4a gemäß der mit I gekennzeichneten Kurve, dargestellt. Dabei verdeutlicht die Kurve $p_{EK}$ den Druckverlauf für das abgehende Schaltelement, d.h. das Schaltelement, welches in der Ausgangsgangstufe aktiviert war und zum Wechsel der Schaltstufen gelöst werden muß. Die Kurve für $p_{DK}$ verdeutlicht den Druckverlauf für das einzuschaltende Schaltelement in der kommenden Gangstufe, d.h. dem Zielgang.

Die erfindungsgemäße Lösung ist hinsichtlich der Beschreibung der die Belastung der miteinander kraftschlüssig zu koppelnden Elemente beschreibenden Größen nicht an die dargestellte Lösung gebunden, andere Möglichkeiten der mathematischen Verknüpfung und Berücksichtigung der die Belastung beschreibenden Größen sind ebenfalls denkbar. Die konkrete Auswahl liegt jedoch im Ermessen des zuständigen Fachmannes und hängt insbesondere von den Möglichkeiten der Erfassung einzelner Größen ab.

**Patentansprüche**

**1.** Verfahren zur Früherkennung von Störfällen beim Betrieb automatischer oder automatisierter Getriebe;

bei welchen, bei einem n-ten Schaltvorgang zwischen einem bestimmten Ausgangsgang ($G_{Ausgang}$) und einem bestimmten Zielgang ($G_{Ziel}$) mindestens eine, die Belastung der miteinander kraftschlüssig zu koppelnden Elemente indirekt oder direkt charakterisierende Größe ($A_{Kraftschl.}$) fortlaufend wenigstens bis zum Erreichen der Synchrondrehzahl oder über eine maximale Schaltdauer ($T_{max}$) ermittelt wird;

bei welchem, die die Belastung der miteinander kraftschlüssig zu koppelnden Elemente charakterisierde Größe ($A_{kraftschlüssig}$) mathematisch mit der Zeit oder beim Vorliegen mehrerer Größen ($A_{kraftschlüssig}$) diese miteinander mathematisch verknüpft werden und das Ergebnis der Verknüpfung in einer Variablen ($W_{sum}$) aufsummiert wird; bei welchem das Ergebnis mit einem ersten vorgebbaren oder definierten Grenzwert ($W_{max0}$) verglichen wird, dessen Überschreitung einen Zustand definiert, in welchem auf eine Schädigung, die im weiteren Betrieb zum Ausfall der Getriebebaueinheit oder zu massiven Beeinträchtigungen der Funktionsweise von an der Kraftübertragung beteiligten Elementen und/oder die Kraftübertragung bewirkenden Elemente bei Schaltfolge zwischen dem bestimmten Ausgangsgang und dem Zielgang ($G_{Ziel}$) geschlossen wird und der Schaltvorgang abgebrochen wird, bei dessen Unterschreitung eine Prüfung auf sich anbahnende Schädigungen der an der Kraftübertragung im Ausgangsgang ($G_{Ausgang}$) beteiligten Elemente und/oder der die Kraftübertragung bewirkenden Elemente im Zielgang ($G_{Ziel}$) vorgenommen und vorbeugende Maßnahmen hinsichtlich der Betriebsweise eingeleitet werden.

2. Verfahren nach Anspruch 1, **dadurch gekennzeichnet, daß** bei Überschreitung des ersten Grenzwertes ($W_{max0}$) und damit des Rückschlusses auf eine Beschädigung von an der Kraftübertragung beteiligten Elementen und/oder die Kraftübertragung bewirkenden Elementen der Schaltfolge zwischen dem bestimmten Ausgangs-gang ($G_{Ausgang}$) und dem bestimmten Zielgang ($G_{Zie}$) der Schaltvorgang abgebrochen wird und dieser Zielgang ($G_{Ziel}$) für alle Schaltvorgänge zwischen dem bestimmten Ausgangsgang ($G_{Ausgang}$) und dem bestimmten Zielgang ($G_{Ziel}$) gesperrt wird.

3. Verfahren nach Anspruch 1, **dadurch gekennzeichnet, daß** bei Überschreitung des ersten Grenzwertes ($W_{max0}$) und damit des Rückschlusses auf eine Beschädigung von an der Kraftübertragung beteiligten Elementen und/oder die Kraftübertragung bewirkenden Elementen der Schaltfolge zwischen Ausgangsgang ($G_{Ausgang}$) und Zielgang ($G_{Ziel}$) der Schaltvorgang abgebrochen wird und eine Rückschaltung in den Ausgangsgang ($G_{Ausgang}$) unter Sperrung des Zielganges ($G_{Ziel}$) für alle Schaltvorgänge erfolgt.

4. Verfahren nach einem der Ansprüche 1 bis 3, **dadurch gekennzeichnet, daß** im Fall der Überschreitung des ersten Grenzwertes dem Fahrer eine Warnmeldung signalisiert wird.

5. Verfahren nach einem der Ansprüche 1 bis 4, **dadurch gekenn-zeichnet, daß** bei Unterschreitung des ersten Grenzwertes ($W_{max0}$) bei Erreichen der Synchrondrehzahl oder einer maximalen Schaltdauer ($T_{max}$) die Variable ($W_{sum}$) mit einem zweiten vorgebbaren oder definier-ten Grenzwert ($W_{max1}$) verglichen wird, bei dessen Überschreitung eine Erhöhung einer ersten Zählervariablen ($Z_{s, MK}$) und bei dessen Unterschreitung eine Erniedrigung der ersten Zählervariablen ($Z_{siMK}$) vorgenommen wird.

6. Verfahren nach Anspruch 5, **dadurch gekennzeichnet, daß** bei Überschreitung des zweiten Grenzwertes ($W_{max1}$) die erhöhte Zählervariable ($Z_{S, MK}$) mit einem weiteren dritten Grenzwert ($Z_{max1}$) verglichen wird, wobei bei Überschreitung eine Warnmeldung ausgegeben wird und zusätzlich ein Vergleich mit einem vierten Grenzwert ($Z_{max0}$) vorgenommen wird.

7. Verfahren nach Anspruch 6, **dadurch gekennzeichnet, daß** bei Überschreitung des vierten Grenzwertes ($Z_{max0}$) durch die Zählervariable eine Schädigung von an der Kraftübertragung beteiligten Elementen und/oder eine Kraftübertragung bewirkenden Elementen des Ausgangsganges ($G_{Ausgang}$) diagnostiziert wird und eine Sperrung dieses Ganges erfolgt.

8. Verfahren nach einem der Ansprüche 6 oder 7, **dadurch gekennzeichnet, daß** bei Überscheitung des zweiten Grenzwertes ($W_{max1}$) durch $W_{sum}$ gleichzeitig die Anzahl der Erhöhungen der ersten Zählervariable ($Z_{S,MK}$) ermittelt wird und in einer zweiten Zählervariablen ($Z_{S2,MK}$) aufsummiert wird.

9. Verfahen nach Anspruch 8, **dadurch gekennzeichnet, daß** die zweite Zählervariable ($Z_{S2,MK}$) mit einem fünften Grenzwert ($Z_{max2}$) verglichen wird und bei Überschreitung dem Fahrer eine Warnmeldung signalisiert wird.

10. Verfahren nach einem der Ansprüche 5 bis 9, **dadurch gekennzeichnet, daß** die Erhöhung oder Erniedrigung der Zählervariablen über fest vorgegebene Werte erfolgt.

11. Verfahren nach Anspruch 10, **dadurch gekennzeichnet, daß** die Erhöhung oder Erniedrigung der Zählervariablen in Abhängigkeit der Größe der Über- oder Unterschreitung durch unterschiedliche fest vorgegebene Werte erfolgt.

12. Verfahren nach einem der Ansprüche 5 bis 11, **dadurch gekennzeichnet, daß** für gleiche Schaltungen zwischen Ausgangsgang ($G_{Ausgang}$) und Zielgang ($G_{ziel}$) mit unterschiedlichem Moment, das Moment der Antriebsmaschine in mehrere Momentenklassen definierter Größen unterteilt wird und in jeder Momentenklasse einer Schaltung eine eigene unabhängige erste Zählervariable gebildet wird.

**13.** Verfahren nach einem der Ansprüche 1 bis 12, **dadurch gekennzeichnet, daß** die die Belastung der miteinander kraftschlüssig zu koppelnden Elemente charakterisierende Größe ($A_{kraftschlüssig}$) von der Reibbarbeit gebildet wird.

**14.** Verfahren nach Anspruch 13, **dadurch gekennzeichnet, daß** zur Ermittlung der Reibarbeit die aktuelle Drehzahldifferenz zwischen der Drehzahl der Getriebeeingangswelle bzw. der mit dieser gekoppelten Antriebsmaschine und der Synchrondrehzahl im einzulegenden Zielgang und dem zur Beaufschlagung oder Betätigung der kraftschlüssig miteinander in Wirkverbindung bringbaren Elemente erforderliche Druck erfaßt werden und die Reibarbeit aus diesen Größen ermittelt wird.

**Claims**

**1.** A method for the early recognition of malfunctions in the operation of automatic or automated transmissions, in which a variable ($A_{Kraftschl.}$) which directly or indirectly characterizes the load of the elements to be coupled with each other in a non-positive way is determined continually at least until reaching the synchronous speed or over a maximum shifting duration ($T_{max}$) in an $n^{th}$ gear-shifting process between a certain initial gear ($G_{Ausgang}$) and a certain target gear ($G_{Ziel}$), in which the variable ($A_{kraftschlossig}$) characterizing the load of the elements to be coupled with each other in a non-positive way are combined mathematically with the time or, in the presence of several variables ($A_{kraftschlussig}$), they are combined with each other mathematically and the result of the combination is summed up in a variable ($W_{sum}$), in which the result is compared with a first predeterminable or defined limit value ($W_{max0}$) which, when exceeded, defines a state in which a conclusion is made about damage which might lead in further operation to the failure of the transmission module or to massive impairments of the function of elements involved in power transmission and/or the elements causing power transmission in the gear-shifting sequence between the specific initial gear and the target gear ($G_{Ziel}$) and the gear-shifting process is discontinued, which, when falling below the limit, a check is made for impending damage to the elements involved in power transmission in the initial gear ($G_{Ausgang}$) and/or the elements causing power transmission in the target gear ($G_{Ziel}$) and preventive measures concerning the operating mode are initiated.

**2.** A method according to claim 1, **characterized in that** upon exceeding the first threshold value ($W_{max0}$) and thus drawing conclusions about damage to elements involved in power transmission and/or elements causing power transmission of the gear-shifting sequence between the specific initial gear ($G_{Ausgang}$) and the specific target gear ($G_{Ziel}$) the gear-shifting process is discontinued and said target gear ($G_{Ziel}$) is blocked for all gear-shifting processes between the specific initial gear ($G_{Ausgang}$) and the specific target gear ($G_{Ziel}$).

**3.** A method according to claim 1, **characterized in that** upon exceeding the first limit value ($W_{max0}$) and thus drawing conclusions about damage of elements involved in power transmission and/or elements causing the power transmission of the gear-shifting sequence between initial gear ($G_{Ausgang}$) and target gear ($G_{Ziel}$) the gear-shifting process is discontinued and a reverse gear-shifting occurs to the initial gear ($G_{Ausgang}$) by blocking the target gear ($G_{Ziel}$) for all gear-shifting processes.

**4.** A method according to one of the claims 1 to 3, **characterized in that** in the case of exceeding the first threshold value the driver is signaled a warning message.

**5.** A method according to one of the claims 1 to 4, **characterized in that** upon falling below the first limit value ($W_{max0}$) when reaching the synchronous speed or a maximum gear-shifting duration ($T_{max}$) the variable ($W_{sum}$) is compared with a second predeterminable or defined limit value ($W_{max1}$), upon which, when exceeded, there will be an increase of a first counter variable ($Z_{s, MK}$) and, when it falls below the limit, the first counter variable ($Z_{siMK}$) is reduced.

**6.** A method according to claim 5, **characterized in that** upon exceeding the second limit value ($W_{max1}$) the increased counter variable ($Z_{s, MK}$) is compared with a third limit value ($Z_{max1}$), with a warning message being issued upon exceeding said variable and additional a comparison with a fourth limit value ($Z_{max0}$) being made.

**7.** A method according to claim 6, **characterized in that** upon exceeding the fourth limit value ($Z_{max0}$) by the counter variable a damage of elements involved in power transmission and/or elements of the initial gear ($G_{Ausgang}$) causing power transmission is diagnosed and a blockage of said gear is made.

8. A method according to one of the claims 6 or 7, **characterized in that** upon exceeding the second limit value ($W_{max1}$) by $W_{sum}$ the number of increases of the first counter variable ($Z_{s, MK}$) is determined simultaneously and is added up in a second counter variable ($Z_{S2, MK}$).

9. A method according to claim 8, **characterized in that** the second counter variable ($Z_{S2, MK}$) is compared with a fifth limit value ($Z_{max2}$) and a warning message is signaled to the drive upon exceeding said value.

10. A method according to one of the claims 5 to 9, **characterized in that** the increase or reduction of the counter variables occurs through fixed predetermined values.

11. A method according to claim 10, **characterized in that** the increase or reduction of the counter variables occurs depending on the magnitude of exceeding or falling below by different fixed predetermined values.

12. A method according to one of the claims 5 to 11, **characterized in that** for the same gear-shifts between initial gear ($G_{Ausgang}$) and target gear ($G_{Ziel}$) with different moment, the moment of the engine is subdivided into different moment classes of defined variables and a separate independent first counter variable is formed in each class of moments of a gear-shift.

13. A method according to one of the claims 1 to 12, **characterized in that** the variable ($A_{kraftschlossig}$) characterizing the load of the elements to be coupled with each other in a non-positive way is formed by friction work.

14. A method according to claim 13, **characterized in that** for determining the friction work the current speed difference between the speed of the transmission input shaft and/or the engine coupled with the same and the synchronous speed in the target gear to be engaged and the pressure required for pressurizing or actuating the elements which can be brought into operative non-positive connection with each other are detected and the friction work is determined form said variables.

**Revendications**

1. Procédé pour la détection précoce des anomalies dans le fonctionnement de boîtes de vitesses automatiques ou automatisées,
dans lequel, lors d'un $n^{ème}$ changement de rapport entre un certain rapport initial ($G_{init}$) et un certain rapport de destination ($G_{dest}$), au moins une grandeur ($A_{friction}$) caractérisant indirectement ou directement la contrainte exercée sur les éléments à coupler par friction est déterminée en continu au moins jusqu'à ce que la vitesse de rotation synchrone soit atteinte ou pendant une durée de changement de rapport maximale ($T_{max}$) ;
dans lequel la grandeur ($A_{friction}$) caractérisant la contrainte exercée sur les éléments à coupler par friction est liée mathématiquement à la durée ou, s'il existe plusieurs grandeurs ($A_{friction}$), celles-ci sont liées mathématiquement les unes aux autres et le résultat de la liaison est totalisé dans une variable ($W_{somme}$) ;
dans lequel le résultat est comparé avec une première limite pouvant être prédéterminée ou définie ($W_{max0}$), dont le dépassement définit un état permettant de conclure à une dégradation entraînant par la suite la défaillance de l'unité d'engrenage ou une altération massive du fonctionnement des éléments participant à la transmission de la force et/ou des éléments réalisant la transmission de la force lors du changement de rapports entre le rapport initial donné et le rapport de destination ($G_{dest}$) et le changement de rapport est interrompu, et qui motive si elle n'est pas atteinte un contrôle de dommages imminents des éléments participant à la transmission de la force au rapport initial ($G_{init}$) et/ou des éléments participant à la transmission de la force au rapport de destination ($G_{dest}$) et la mise en oeuvre de mesures préventives au niveau du mode de fonctionnement.

2. Procédé selon la revendication 1, **caractérisé en ce que** si la première limite ($W_{max0}$) est dépassée et que l'on conclut ainsi à une dégradation des éléments participant à la transmission de la force et/ou des éléments réalisant la transmission de la force dans la séquence de rapports entre le rapport initial donné ($G_{init}$) et le rapport de destination donné ($G_{dest}$), le changement de rapport est interrompu et ce rapport de destination ($G_{dest}$) est bloqué pour tous les changements de rapport entre le rapport initial donné ($G_{init}$) et le rapport de destination donné ($G_{dest}$).

3. Procédé selon la revendication 1, **caractérisé en ce que** si la première limite ($W_{max0}$) est dépassée et que l'on conclut ainsi à une détérioration des éléments participant à la transmission de la force et/ou des éléments réalisant la transmission de la force de la séquence de rapports entre le rapport initial ($G_{init}$) et le rapport de destination ($G_{dest}$), le changement de rapport est interrompu et revient au rapport initial ($G_{init}$) en bloquant le rapport de destination ($G_{dest}$) pour tous les changements de rapport.

**4.** Procédé selon l'une des revendications 1 à 3, **caractérisé en ce que** si la première limite est dépassée, un message d'avertissement est transmis au conducteur.

**5.** Procédé selon l'une des revendications 1 à 4, **caractérisé en ce que** si la première limite ($W_{max0}$) n'est pas atteinte, lorsque la vitesse de rotation synchrone ou une durée de changement de rapport maximale ($T_{max}$) est atteinte, la variable ($W_{somme}$) est comparée à une deuxième limite ($W_{max1}$) pouvant être prédéterminée ou définie, dont le dépassement entraîne l'augmentation d'une première variable de compteur ($Z_{s,MK}$) et qui motive, si elle n'est pas atteinte, la réduction de la première variable de compteur ($Z_{s,MK}$).

**6.** Procédé selon la revendication 5, **caractérisé en ce que** si la deuxième limite ($W_{max1}$) est dépassée, la variable de compteur ($Z_{s,MK}$) augmentée est comparée à une troisième limite ($Z_{max1}$), dont le dépassement déclenche un message d'avertissement et une comparaison avec une quatrième limite ($Z_{max0}$).

**7.** Procédé selon la revendication 6, **caractérisé en ce que** si la quatrième limite ($Z_{max0}$) est dépassée, la variable de compteur permet de diagnostiquer une détérioration des éléments participant à la transmission de la force et/ou des éléments réalisant la transmission de la force du rapport initial ($G_{init}$) et ce rapport est bloqué.

**8.** Procédé selon l'une des revendications 6 ou 7, **caractérisé en ce que** si la deuxième limite ($W_{max1}$) est dépassée, $W_{somme}$ détermine simultanément le nombre d'augmentation de la première variable de compteur ($Z_{s,MK}$) et les additionne dans une deuxième variable de compteur ($Z_{S2,MK}$).

**9.** Procédé selon la revendication 8, **caractérisé en ce que** la deuxième variable de compteur ($Z_{S2,MK}$) est comparée à une cinquième limite ($Z_{max2}$) et, en cas de dépassement, un message d'avertissement est transmis au conducteur.

**10.** Procédé selon l'une des revendications 5 à 9, **caractérisé en ce que** l'augmentation ou la réduction des variables de compteur se font selon des valeurs prédéterminées.

**11.** Procédé selon la revendication 10, **caractérisé en ce que** l'augmentation ou la réduction des variables de compteur se font en fonction de la grandeur du dépassement ou de l'insuffisance selon des valeurs prédéterminées.

**12.** Procédé selon l'une des revendications 5 à 11, **caractérisé en ce que** pour les mêmes changements entre le rapport initial ($G_{init}$) et le rapport de destination ($G_{dest}$) à un couple différent, le couple du moteur d'entraînement est divisé en plusieurs classes de couple de grandeurs définies et une première variable de compteur indépendante est formée pour chaque classe de couple d'un changement de rapport.

**13.** Procédé selon l'une des revendications 1 à 12, **caractérisé en ce que** la grandeur ($A_{friction}$) caractérisant la contrainte exercée sur les éléments à coupler par friction est formée par l'effort de friction.

**14.** Procédé selon la revendication 13, **caractérisé en ce que** pour déterminer l'effort de friction, la différence actuelle de vitesse de rotation entre la vitesse de l'arbre d'entrée de l'engrenage ou du moteur d'entraînement qui lui est couplé et la vitesse de rotation synchrone dans le rapport de destination à établir et la pression nécessaire pour agir sur ou actionner les éléments pouvant être mis en relation active par friction sont mesurées et l'effort de friction est déterminé à partir de ces grandeurs.

Fig.1

Schaltbefehl für i-te Schaltung
$G_{Ausgang1} \rightarrow G_{Ziel1}$

$W_{sum} = 0$
$Z_{S,Mki} = Z_{S,Mki-1}$
$Z_{S2,Mki} = Z_{S2,Mki-1}$

Ermittlung von $A_{kraftschl.}$ über $\Delta t$

$F_t = f(A_{kraftschl.}, \Delta t)$

$W_{sum} = \Sigma F_t$
mit $t=0$ bis $t_{synchron}$

$W_{sum} > W_{max0}$ — j — $G_{Ziel1} = G_{Zielalt}$
$G_{Ausgang1} = G_{Ausgangalt}$ — $G_{zielneu} = G_{Ausgangalt}$ — Sperrung $G_{Zielalt}$ Warnmeldung

n

$n_{aktuell} = n_{synchron}$
oder
$\Delta t > T_{max}$ — n

j

$M_{Motor} = konstant$ ——— Ende

j

$W_{sum} > W_{max1}$ — n — $Z_{S,Mki} = Z_{S,Mki-1} - n$

j

$Z_{S,Mki} = Z_{S,Mki-1} + n$            $Z_{S2,Mki} = Z_{S2,Mki-1} + n$

$i=n, Z_{S,Mki} > Z_{max1}$            $Z_{S2,Mki} > Z_{max2}$

j            j

Warnmeldung            Warnmeldung

j

$Z_{S,Mki} > Z_{max0}$

Sperrung $G_{Ausgangalt}$

Fig.2

# Fig.3

Schlechte Schaltung

$Z_{S,MK}$

$Z_{Max0}$ K

$Z_{Max1}$ K

Gute Schaltung

0   1   2   3   4   5   6   7   8   Anzahl Schaltungen

## Fig.4a

## Fig.4b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19652212 A1

### In der Beschreibung aufgeführte Nicht-Patentliteratur

- **J.M. VOITH.** Hydrodynamik in der Antriebstechnik. Krauskopf Verlag, 1987